**Europäisches Patentamt**

**European Patent Office**

**Office européen des brevets**

(19)

(11) Veröffentlichungsnummer: **0 109 571**

**B1**

(12) ## EUROPÄISCHE PATENTSCHRIFT

(45) Veröffentlichungstag der Patentschrift:
23.07.86

(21) Anmeldenummer: **83110573.9**

(22) Anmeldetag: **22.10.83**

(51) Int. Cl.⁴: **A 01 B 45/00**, A 01 C 5/06

(54) Vorrichtung zur Erneuerung von Grünland- und Rasenflächen.

(30) Priorität: **25.10.82 DE 3239469**
**06.10.83 DE 3336455**

(43) Veröffentlichungstag der Anmeldung:
**30.05.84 Patentblatt 84/22**

(45) Bekanntmachung des Hinweises auf die Patenterteilung:
**23.07.86 Patentblatt 86/30**

(84) Benannte Vertragsstaaten:
**CH IT LI NL**

(56) Entgegenhaltungen:
**DE-A-2 232 108**
**DE-B-1 272 612**
**DE-U-1 918 020**
**DE-U-1 978 855**
**DE-U-8 021 339**

(73) Patentinhaber: **Wolf- Geräte GmbH, Gregor- Wolf-Strasse Postfach 860 und 880, D-5240 Betzdorf/Sieg (DE)**

(72) Erfinder: **Orth, Günter, Kapellenweg 19, D-5245 Birken/Sieg (DE)**

(74) Vertreter: **Koch, Günther, Dipl.- Ing., Kaufingerstrasse 8, D-8000 München 2 (DE)**

EP 0 109 571 B1

## Beschreibung

Die Erfindung bezieht sich auf eine Vorrichtung der im Oberbegriff des Anspruchs 1 angegebenen Gattung. Eine solche Vorrichtung ist aus der DE-A-12 72 612 bekannt. Mit dieser Vorrichtung werden in den Rasenflächen in Abständen von etwa 15 bis 60 cm sich kreuzende Rillen durch eine schnell rotierende Frässcheibe eingefräst, die sternförmig ausgebildet ist und Arbeitsschneiden am äußeren Ende der Sternarme trägt. Durch diese Frässcheiben sollen Rillen gleichbleibender Tiefe hergestellt werden. Es hat sich aber gezeigt, daß durch die schnell laufenden Fräsmesser die Rillenwände häufig nicht in der erwünschten Weise glatt gestaltet werden, sondern häufig, insbesondere beim Auftreffen auf Steine, harter Brocken oder harter Pflanzenteile ausbrechen und das ausbrechende Erdreich die Rille wieder undefiniert bis zu einer gewissen Höhe füllt, so daß der Grassamen zwar in unterschiedlichen Höhen zu liegen kommt, aber in rein zufälliger Verteilung, so daß ein gewünschtes Saatbild nicht gewährleistet ist.

Durch die DE-GMS 19 18 020 ist eine Vorrichtung zur Erzeugung von Pflanzungsrillen bekannt, die in Gehölzpflanzungen eingesetzt werden soll. Zur Herstellung der Hüllen sind schnell rotierende Fräsmesserscheiben mit abwechselnden Messern und Auswurfschaufeln vorgesehen. Auch hierbei kann ein Ausbrechen der Wände und ein Auffüllen der Rillen nicht verhindert werden, so daß beim Einsetzen der Stechlinge die Tiefe ausgeglichen werden muß.

Es ist ferner aus der DE-A-22 32 108 eine Vorrichtung bekannt, die Frässcheiben in Form von sternförmig abstehenden Trägerarmen mit Schneiden aufweist. Diese flachen Schneiden liegen quer zur Rillenebene und können daher nicht in das Erdreich einschneiden, sondern dieses nur aufreißen, so daß sich unregelmäßige Wandformen ergeben, was im bekannten Fall ohne Bedeutung ist, weil die Rillen anschließend sofort mit Drainiermaterial ausgefüllt werden und nicht zum Einbringen von Saatgut herangezogen werden.

Der Erfindung liegt die Aufgabe zugrunde, eine Vorrichtung der eingangs umrissenen Art so auszubilden, daß ein sauberes Ausstechen von Pflanzrillen gewährleistet ist, die einen definierten wellenförmigen Grund und glatte Schlitzwände aufweisen und die Gewähr für eine gleichmäßige Verteilung beim Ansäen von Zuchtrasengräsern bieten, mit denen eine schnelle Regenerierung der Rasenflächen möglich wird.

Gelöst wird die gestellte Aufgabe durch die im Kennzeichnungsteil des Patentanspruchs 1 angegebenen Merkmale.

Ein Umlauforgan in Form einer auf dem Boden abrollenden Trommel, an der als Messer ausgebildete Werkzeuge jeweils paarweise einander gegenüberliegend angeordnet sind, ist zur Bearbeitung von Grünland und Rasenflächen aus dem Prospekt "MARIBA-Ryan" schon bekannt. Hierbei handelt es sich jedoch nur um eine Airifizierungsmaschine zum Lockern verdichteter Rasenflächen. Hier werden zwar zur Belüftung des Rasens Einschnitte in Messerbreite vorgenommen, jedoch keine Rillen geschaffen, in die Saatgut eingebracht werden könnte. Es ist ferner aus der DE-A-419 106 eine Vorrichtung mit gegenüberliegenden hohlschaufelförmigen Werkzeugen bekannt, die beim Einstechen in das Erdreich das zwischen den Werkzeugen befindliche Erdreich ausschneiden und beim Anheben mit nach außen fördern. Als Träger ist hierbei jedoch keine am Boden ablaufende Trommel vorgesehen, sondern ein Handgerät in Form eines Spatens, mit dem jeweils nur ein einziges Pflanzloch, nicht aber eine durchgehende Rille gebildet werden kann.

Bei der Erfindung wird durch die sich abrollenden Messerpaare eine Rille mit wellenförmigem Grund geschaffen, wobei der jeweils zwischen den beiden Messern eines Messerpaares ausgeschnittene Boden durch eine besondere Einrichtung ausgehoben und in zerkrümmelter Form neben die Rille gebracht wird.

Die definiert wellenförmige Ausbildung des Rillengrundes ist besonders zweckmäßig, weil hierdurch das Saatgut so abgelagert werden kann, daß es optimalen Wachstumsverhältnissen ausgesetzt wird, denn unter allen denkbaren Witterungsverhältnissen kann wenigstens ein Teil der Keime befriedigend wachsen, wobei während trockener Perioden bevorzugt die in den Tiefenbereichen abgelegten Keime wirksam werden, während bei größerer Feuchtigkeit bevorzugt die in geringerer Tiefe abgelegten Keime zur Neubildung des Rasens beitragen.

Es ist zwar durch die DE-A-906 522 bereits eine Zuckerrübensamen-Sämaschine mit einer Pflugschar und einem Särohr bekannt, bei der durch eine Nockenführung des Ablaufrandes gesteuert, wellenförmige Rillen hergestellt werden, um das Ablegen des Saatgutes in unterschiedlicher Höhe zu bewirken. Durch die hier vorgesehenen Schareisen werden jedoch keine durch glatte Schlitzwände gebildeten Pflanzrillen gebildet, sondern die Schareisen bilden selbst die Sävorrichtungen.

Weitere zweckmäßige Ausgestaltungen der Erfindung ergeben sich aus den Unteransprüchen.

Nachstehend werden Ausführungsbeispiele der Erfindung anhand der Zeichnung beschrieben. In der Zeichnung zeigen:

Fig. 1 eine Seitenansicht eines Messerpaares, welches in Verbindung mit anderen Messerpaaren am Trommelmantel einer erfindungsgemäßen Vorrichtung angeordnet ist;

Fig. 2 eine Ansicht eines Messerpaares gemäß Fig. 1 in Richtung des Pfeiles II betrachtet;

Fig. 3 eine Seitenansicht einer erfindungsgemäß rotierenden ausgebildeten Vorrichtung;

Fig. 4 eine Draufsicht der Vorrichtung gemäß Fig. 3;

Fig. 5 eine Seitenansicht einer anderen Ausführungsform einer nach der Erfindung ausgebildeten Vorrichtung;

Fig. 6 einen Schnitt nach der Linie VI - VI gemäß Fig. 5;

Fig. 7 eine Einzelheit der in Fig. 5 dargestellten Vorrichtung;

Fig. 8 in größerem Maßstab eine Teilansicht einer Messerscheibe;

Fig. 9 eine Teilansicht einer abgewandelten Ausführungsform der erfindungsgemäß ausgebildeten Vorrichtung.

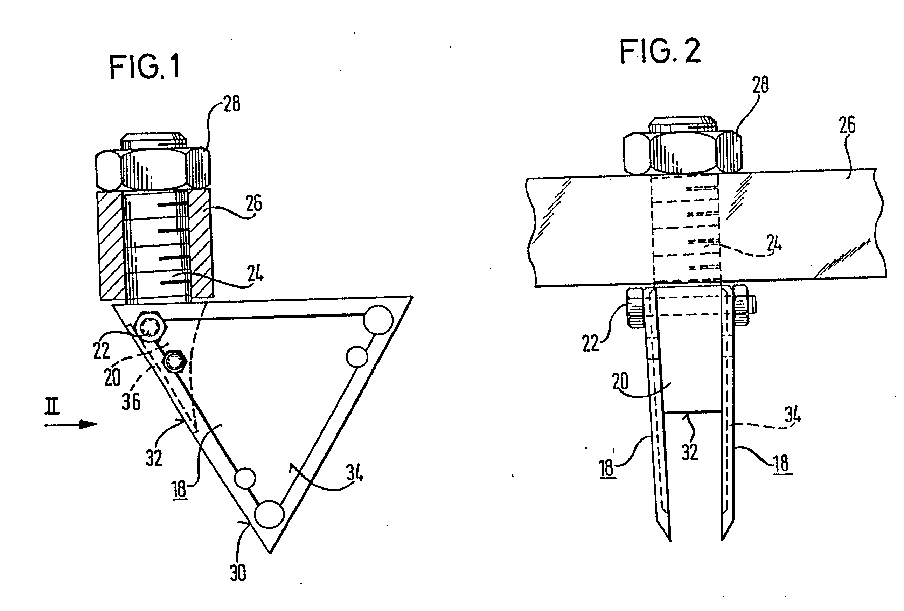

Die Werkzeuge der erfindungsgemäßen Vorrichtung können gemäß dem Ausführungsbeispiel nach Fig.1 und 2 ausgebildet sein. Danach besteht jedes Werkzeug aus zwei parallel zueinander angeordneten Dreiecksmessern 18, zwischen denen ein Distanzstück 20 liegt, an dem die Messer an einer Ecke mittels eines Schraubbolzens 22 verspannt sind. Das Distanzstück ist mit einem Zapfen 24 verbunden, der durch ein Loch eines Messerbalkens 26 geführt und mit einer Mutter 28 gesichert ist. Das Distanzstück ist, wie aus Fig.1 ersichtlich, schaufelartig und zweiseitig konisch ausgebildet, wobei der Hinterrand des Distanzstückes sich etwa über die halbe Länge der nachlaufenden Messerkante 30 erstreckt.

Durch diesen schaufelartigen Endabschnitt 32 wird erreicht, daß das zwischen den beiden Messern 18 ausgeschnittene Erdreich quer abgetrennt und aus der so gebildeten Rille ausgehoben wird. Der Messerbalken 26 sitzt am Umfang einer in der Zeichnung nicht dargestellten Walze oder Trommel, die einen Durchmesser von etwa 60 cm besitzt, wobei die Fig. 1u.2 und die Werkzeuge in einem Abbildungsmaßstab von etwa 1:1 wiedergeben.

Die Messer weisen auf der Innenseite eine dreiseitige konkave Vertiefung 34 auf, die das Festhalten des keilförmigen Erdstopfens beim Aushub des Werkzeugs verstärken. Gemäß einem bevorzugten Ausführungsbeispiel wird das schaufelförmige Endstück 32 von einer am Distanzstück 20 auswechselbar eingesetzten Schneidklinge 36 gebildet.

Durch Anzahl und Abstand der Messer auf dem Messerbalken kann die Zahl der Rillen und ihr gegenseitiger Abstand festgelegt werden. Der Abstand der einzelnen Wellenberge, d.h. die Periode der Vertiefungen kann durch entsprechende Zahl der Messerbalken am Umfang der Walze festgelegt werden. Durch entsprechende Anordung der Werkzeuge ist es auch möglich, die Wellungen benachbarter Rillen gegeneinander zu versetzen.

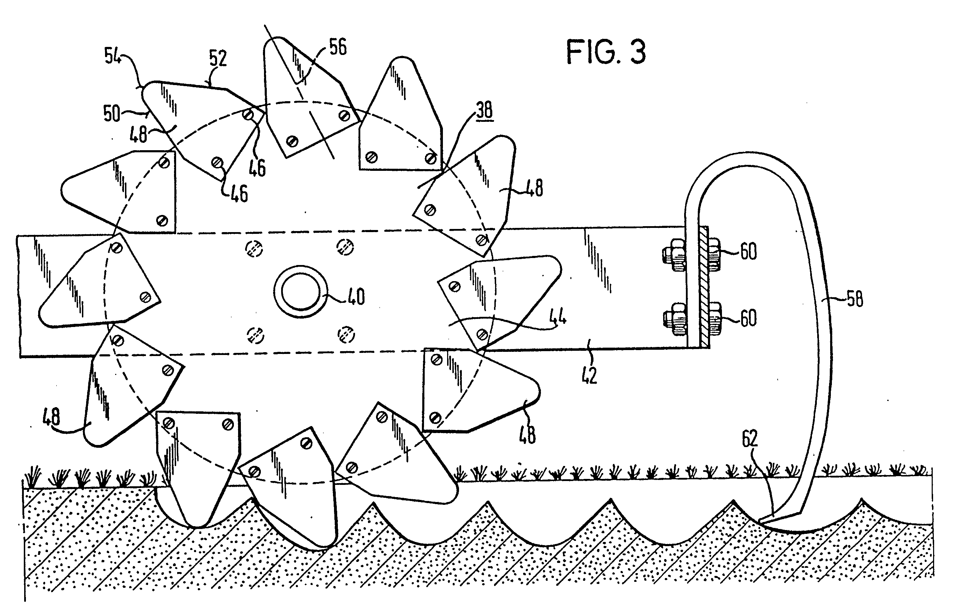

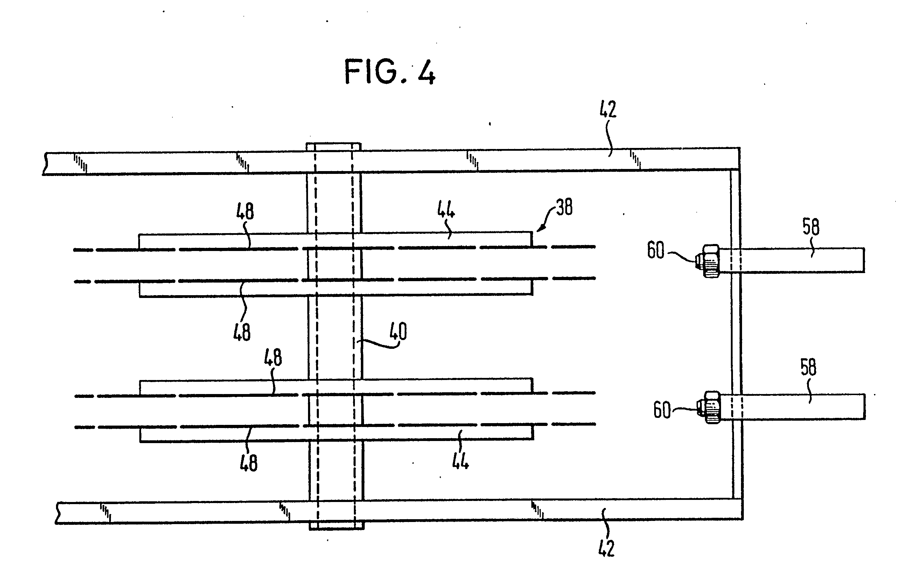

Ein weiteres Ausführungsbeispiel einer Maschine zur Herstellung von Zahnrillen ergibt sich aus den Figuren 3 und 4. Die hier dargestellte Maschine weist eine Trommel 38 auf, die von einer Welle 40 getragen wird, die ihrerseits in Lagern zweier Längsträger 42 abgestützt ist. Die Längsträger 42 sind vor und hinter der Trommel miteinander durch nicht dargestellte Querverstrebungen verbunden und mit einer Anhängvorrichtung versehen, mit der sie an einem Traktor oder einer anderen Zugmaschine anhängbar sind.

Die Trommel weist mehrere von der Welle 40 getragene und vorzugsweise auf dieser Welle verschiebbare und in verschiedenen axialen Stellungen festlegbare Messerträgerscheiben 44 auf, an deren Umfang mittels zweier Schrauben 46 Dreiecksmesser 48 in der aus Fig. 3 ersichtlichen Weise angeordnet sind. Diese Dreiecksmesser sind in Form eines gleichschenkligen Dreiecks gestaltet und weisen eine Vorlaufschneide 50 und eine Nachlaufschneide 52 auf. Dazwischen verläuft ein abgerundeter Spitzenteil 54. Wie aus Fig. 3 ersichtlich, sind die Messer derart angeschraubt, daß ihre Symmetrieachse 56 gegenüber dem Radius der Trommel 38 schräggestellt ist, so daß die Messer im wesentlichen senarecht in das Erdreich eindringen wenn die Walze von der Zugmaschine gezogen gemäß Fig. 3 nach links abgerollt wird.

Zwischen den Messern 48 können wiederum Distanzstücke angeordnet werden, die mit entsprechenden Auswurfschaufeln versehen sind. Es hat sich jedoch gezeigt, daß bei dieser Ausführungsform auf die Einzelschaufeln verzichtet werden kann und das Erdreich, soweit es nicht von den Messern mit ausgehoben wird, durch einen Räumzinken 58 entfernt werden kann, der hinten an der Maschine mittels Schrauben 60 festgelegt ist und jeweils hinter zwei Messerscheiben 44 zwischen diesen zu liegen kommt und das Erdreich zwischen den beiden seitlichen Schlitzen aufhebt. Dieser Zinken ist mit einer nach vorn gerichteten, schräg nach unten weisenden Spitze 62 versehen und kann der Wellenform des Schlitzgrundes folgen.

Ein solcher Räumzinken ist jeweils hinter jedem Schlitzmesserscheibenpaar angeordnet.

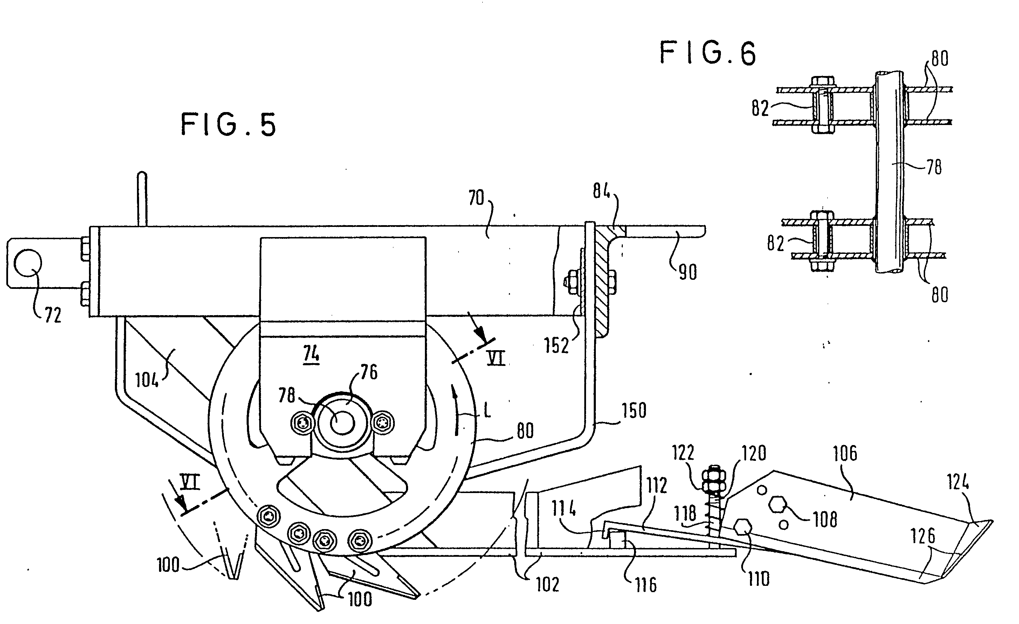

Bei dem Ausführungsbeispiel gemäß Fig. 5 ist ein Werkzeugträgerrahmen 70 vorgesehen, der dem Rahmen 42 gemäß Fig. 4 entspricht. Dieser Rahmen 70 ist über ein Scharnier 72 mit dem nicht dargestellten Maschinenrahmen um eine horizontale Achse schwenkbar angelenkt. Der Maschinenrahmen trägt nebeneinander mehrere derartige Werkzeugträgerrahmen 70, deren Zahl sich nach der Arbeitsbreite der Maschine richtet. Die Achsen der Scharniere 72 der verschiedenen Werkzeugträgerrahmen 70 fluchten. Die Rahmen 70 können zur Veränderung des Rillenabstandes in ihren Scharnieren gegeneinander verschoben werden und es können in der Zahl unterschiedliche Werkzeugträgerrahmen 70 je nach Rillenabstand und Maschinenbreite angeordnet werden. Der nicht dargestellte Maschinenrahmen kann seinerseits am Zugfahrzeug höhenverstellbar angelenkt sein, so daß die Stellung des Werkzeugträgerrahmens 70 verändert werden kann. Zwischen zwei von den Seitenholmen des Rahmens 70 nach unten geführten Lagerschilden 74 wird über Kugellager 76 eine Welle 78 gelagert, auf die Messerträgerscheiben 80 drehfest aufgesetzt sind, von denen jeweils zwei über Abstandshalter 82 verbunden sind, die die Rillenbreite bestimmen. Der Abstand der Messerscheibenpaare auf der Welle 78 bestimmt den Rillenabstand.

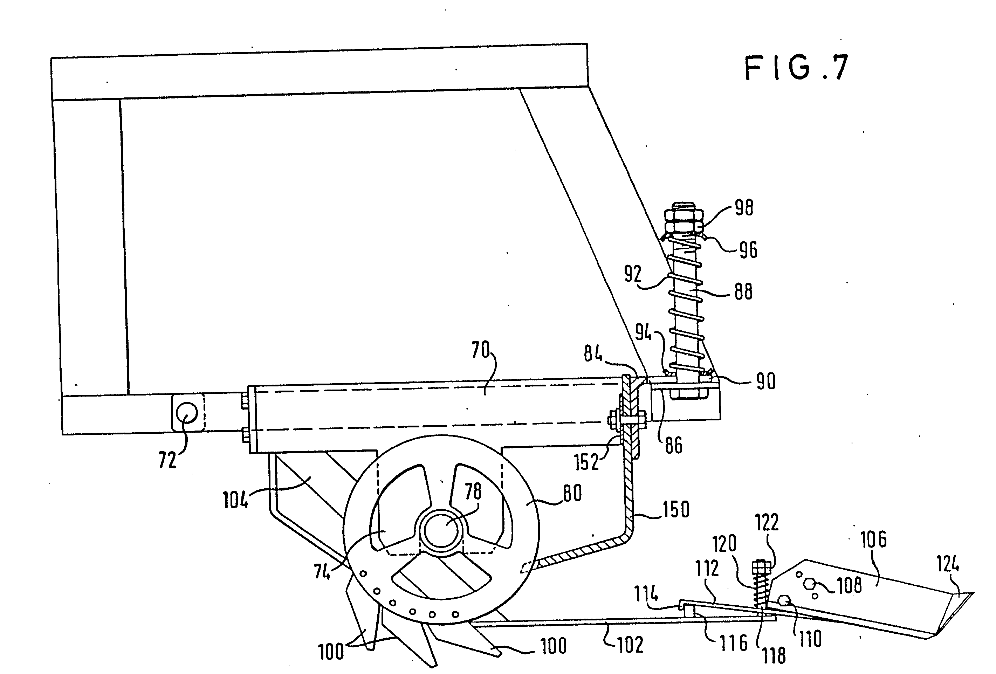

Wie aus Fig. 7 ersichtlich, liegt der Werkzeugträgerrahmen 70 mit seinem nach hinten weisenden Winkelstück 84 auf einem Träger 86 des Hauptmaschinenrahmens auf. An diesem Träger ist ein nach oben weisender Bolzen 88 befestigt, der durch einen Schlitz 90 oder eine Bohrung des Winkelstücaes 84 durchsteht und eine Schraubenfeder 92 trägt, die beidseitig über Federteller 94 bzw. 96 abgestützt ist. Der untere Federteller 94 liegt auf dem Winkelstück 84, und der obere Federteller 96 wird von einer Mutter 98 abgestützt, die auf den Schraubbolzen 88 aufgeschraubt ist. Auf diese Weise wird der Werkezugträgerrahmen 70 elastisch gegenüber dem Hauptmaschinenrahmen abgestützt, d.h. jeder einzelne Rahmen 70 kann beim Auftreffen auf erhöhte Widerstände um das Scharnier 72 nach oben ausschwenken, wobei die Feder 92 zusammengepreßt wird. Somit kann jeder einzelne Werazeugträgerrahmen 70 mit seinen beiden Messerscheibenpaaren sowohl auftretenden Hindernissen als auch kurzen Bodenwellen ausweichen.

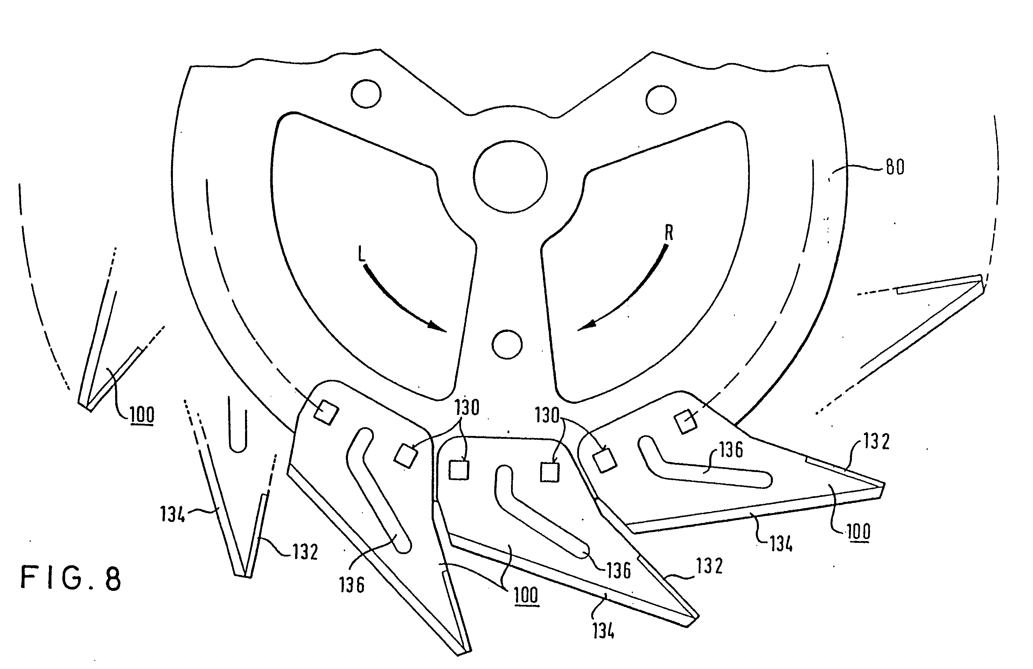

Am Umfang der Messerscheiben 80 sind Messerklingen 100 eingesetzt, die im einzelnen in Verbindung mit Fig. 8 beschrieben werden.

Am Werkezugträgerrahmen 70 sind zwei Kufen 102 aufgehängt, die zwischen den Messerscheiben 80 eines jeden Paares federnd auf dem Boden abgestützt sind. Die Aufhängung dieser Kufen 102 erfolgt über Trägerelemente 104. Diese Kufen tragen an ihrem hinteren Ende je eine Kappschar 106. Diese Kappschare 106 sind mittels zweier Bolzen 108 bzw. 110 an dem hinteren abgewinkelten Ende des Zwischenstücks 112 angeschraubt. Dieses ruht mit seiner vorderen Mitnehmerkralle 114 auf einem auf der Kufe 102 aufgeschweißten Lagerbock 116. Ein mit der Kufe 102 fest verbundener Bolzen 118 steht von der Kufe durch ein Loch des Zwischenstückes 112 nach oben vor und trägt eine Druckschraubenfeder 120, die sich einerseits gegen das Zwischenstück 112 und andererseits gegen eine auf den Bolzen aufgeschraubte Mutter 122 abstützt. Auf diese Weise sind die Kappschare 106 zusätzlich nochmals in vertikaler Richtung abgefedert.

Gemäß Fig. 5 ist der Bolzen 108 durch eine mittlere von drei auf gleichem Radius zur Achse des Bolzens 110 liegenden Löchern geführt, wodurch sich eine Mittelstellung für die Kappschar 106 ergibt. Wird der Bolzen 108 durch das untere Loch geführt, wird der Neigungswinkel der Kappschar verringert, wenn er durch das obere Loch geführt wird, ergibt sich eine noch stärkere Neigung. Das hintere Ende der Kappschar weist eine in einem Winkel von 70° gegenüber der Schar 106 verlaufende Abwinkelung 124 auf, die ebenso wie die Schar mit einer Schneidkante 126 versehen ist. Die Schneidkante 126 der Abwinklung 124 ist in der aus Fig. 5 ersichtlichen Weise abgeschrägt. Die Kappscharen sind so angeordnet, daß sie mit dem Zwischenraum zwischen den Messerscheiben der Messerpaare fluchten. Sie dienen dazu, die hergestellten Rillen zu säubern und gegebenenfalls zu begradigen, um sie für das Einführen des Saatgutes freizuhalten. Um ein Verstopfen zu verhindern und einen möglichst großen Freiraum zwischen den Kappscharen zu schaffen, sind die Kappschare zweckmäßigerweise gestaffelt angeordnet, indem die Länge benachbarter Kufen 102 unterschiedlich bemessen wird.

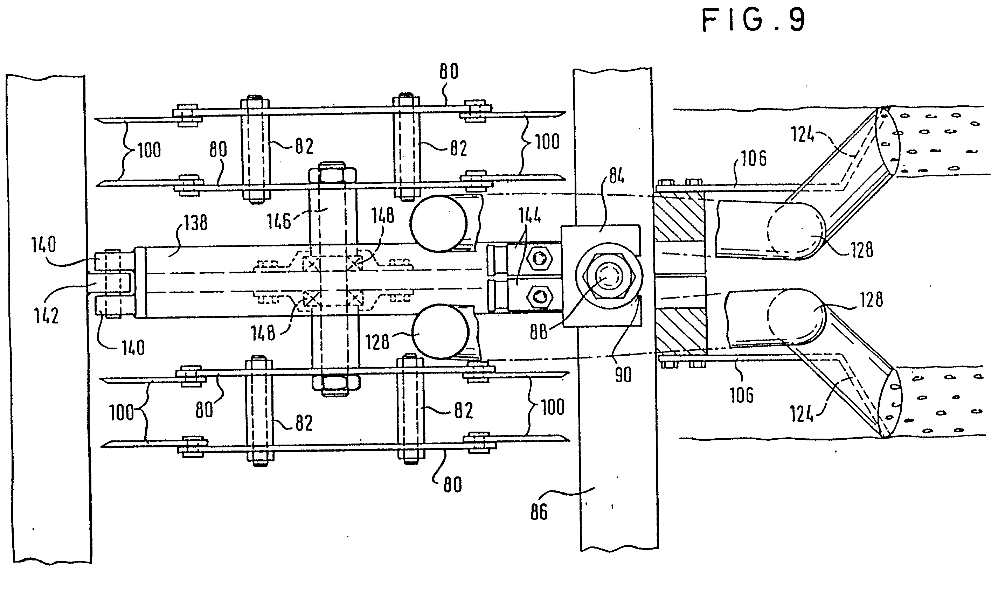

Hinter den Kappscharen 106 sind Saatröhren 128 (Fig. 9) angeordnet, die das Saatgut aus einem nicht dargestellten Behälter in die hergestellten Rillen gelangen lassen. Hinter diesen Saatröhren sind entweder Zustreichbleche oder Federzinken angeordnet, die für das Abdecken der Saat Sorge tragen.

Wie insbesondere aus Fig. 8 ersichtlich, ist jede Messerklinge 100 im wesentlichen in Form eines spitzwinkligen Dreiecks ausgebildet. Über zwei Befestigungslöcher 130 ist jedes Messer am Umfang der Messerträgerscheibe 80 befestigt und die Messerklinge weist eine steile Messerflanke 132 und eine flache Messerflanke 134 auf. Die Flanke 134 weist gegenüber der Tangente der Messerscheibe einen kleinen Winkel auf, und die Flanke 132 einen größeren Winkel. Der die Schneiden einschließende Winkel beträgt etwa 75 bis 80°.

Die Messerklinge ist durch eine Sicke 136 versteift. Ein Abschnitt der nachlaufenden Schneidflanke kann durch eine rechtwinklig nach innen abgebogene schaufelartige Räumkante ersetzt werden. Wenn sich die Messerscheiben in Richtung des Pfeiles R gemäß Fig. 8 drehen, dann kann es die Schneidkante 132 sein, die eine nach innen weisende Räumkante aufweist. In der Darstellung gemäß Fig. 5, wo der Schlepper an der linken Seite angreift, rollt die Vorrichtung von rechts nach links ab, d.h. die Messerscheiben drehen sich in Richtung des Pfeiles L. Hierdurch kommen die Messerklingen mit ihrer steilen Flanke 132 und ihrer Spitze mit dem Boden in Eingriff. Diese Abrollrichtung ist besonders für harten Boden geeignet, weil hier bei gleicher Belastung ein tieferer Einschnitt erzielt werden kann. Die Messerscheiben können jedoch auch so montiert werden, daß die Messerscheiben in Richtung des Pfeiles R abrollen. Dann dringen die Messerklingen mit ihrer flachen Flanke 134 in das Erdreich ein, und diese Drehrichtung ist zweckmäßig, wenn weicher Boden bearbeitet werden soll.

Fig. 9 zeigt ein abgewandeltes Ausführungsbeispiel. Hierbei ist der Werkzeugträgerrahmen 70 gemäß Fig. 5 und 7 ersetzt durch einen Trägerbalken 138, der über Augen 140 an einem Lager 142 des Maschinenrahmens angelenkt ist. Dieser Trägerbalken 138 weist wiederum ein Winkelstück 84 mit einem Schlitz 90 auf, der einen Bolzen 88 umschließt, der wie bei dem Ausführungsbeispiel nach Fig. 7 eine Schraubenfeder trägt, wodurch der Balken 138 federnd gelagert wird. Der Trägerbalken 138 haltert längsverschieblich zwei Kufen 144, die an ihrem hinteren Ende über je ein Lager je eine Kappschar 106 tragen, deren abgewinkelte Enden 124 mit dem Zwischenraum zwischen zwei Messerscheiben je eines Messerscheibenpaares fluchten. Diese Messerträgerscheiben 80, die wiederum über Distanzstücke in ihren gegenseitigen Abstand festgelegt sind, werden in diesem Falle von einer Welle 146 getragen, die in einem Kugellager 148 gelagert ist, das in dem Trägerbalken 138 eingefügt ist. Durch unterschiedlich lange Wellen 146 oder unterschiedlich lange Distanzrohre, die auf der Welle 146 aufgezogen sind, kann der gegenseitige Abstand der Messerscheibenpaare eingestellt werden.

Die im Bodeneingriff verstellbaren Kappschare 106 haben die Aufgabe eines den Messerklingen zugeordneten Räumwerkzeuges, das je nach Zustand der einzusehenden Fläche verschiedene Aufgaben zu erfüllen hat:

1. Bei dichten Grünlandnarben kommt der Kappschar die Aufgabe zu, die von den Messerklingen hinterlassene zackenförmige Saatrille entweder zu nivellieren, oder die sich aus der Zahnrille ergebenden Spitzen wegzuschneiden, um zu starke Höhenunterschiede in der Zahnrille zu verhindern.

2. Bei der Direkteinsaat auf unbearbeiteten Ackerflächen begrenzen die Messerklingenpaare zuerst die Saatrille und die nachfolgende Kappschar räumt das Saatbett in der gewünschten Tiefe aus.

Bei der Einssat von Getreidearten schaffen die Messerklingen ebenfalls eine seitliche Abgrenzung der Rille, während die Kappschare hauptsächlich die Aufgabe haben, eine entsprechend breite Sohle für die gleichmäßig tiefe Ablage des Saatgutes zu schaffen.

Das Saatgut selbst wird über den Saatkasten einer herkömmlichen Sämaschine den jeweiligen Saatröhren 128 zugeführt, die lediglich in Fig. 9 angedeutet sind. Diese Saatröhren legen entweder einzeln hinter den Kappscharen das Saatgut ab, oder sie sind als Doppelrohr in Fluchtlinie hinter den kufen angeordnet und erst kurz über den Kappscharen deltaförmig auseinandergeführt, um das Saatgut in die beiderseitig von der Kufe verlaufenden Saatrillen einzuführen.

Zwischen zwei Messerträgerscheiben kann, wie aus Fig. 5 ersichtlich, ein Räumeisen 150 vorgesehen sein, das am Rahmen 70 höhenverstellbar mittels einer Klemmplatte 152 festlegbar ist. Dieses Räumeisen 150 hat die Aufgabe, die Messerklingen von anhaftendem Erdreich freizuhalten.

**Patentansprüche**

1. Vorrichtung zur Herstellung parallelwandiger Rillen in Grünland und Rasenflächen, in denen in unterschiedlichen Höhen Grassamen abgelegt werden, mit einem trommelartig umlaufenden Organ (38, 100), das über seinen Umfang nach außen vorstehende Werkzeuge (18, 48, 100) aufweist, die das Erdreich aus den Rillen ausheben, dadurch gekennzeichnet, daß das Umlauforgan als auf dem Boden abrollende Trommel (38, 80) ausgebildet ist, an der als Messer (18, 48, 100) ausgebildete Werkzeuge jeweils paarweise einander gegenüberliegend mit ihrer Schneidebene in der Ebene der Rillenwände liegend angeordnet und in Umfangsrichtung derart benachbart sind, daß sich ihre Wirkungsbereiche überschneiden und Schlitze fortlaufend veränderter Tiefe im Boden gewährleisten, wobei zum Einwirken auf die freigeschnittenen Erdstreifen besondere Einrichtungen (34, 32, 58, 106) vorgesehen sind, die das Ausheben des Erdreiches und seine Entfernung aus den zu bildenden Rillen gewährleisten.

2. Vorrichtung nach Anspruch 1, dadurch gekennzeichnet, daß die Einrichtungen zum Ausheben des Erdreichs von konkaven Vertiefungen (34) gebildet sind, die an den einander zugewandten Seiten gegenüberstehender Messer (18, 48) angeordnet sind, wobei ein nachlaufender Räumzinken (58) zum Entfernen vorgesehen ist, der in den Bereich der von den Messern (18, 48) gebildeten Pflanzrille eingreift.

3. Vorrichtung nach Anspruch 2, dadurch gekennzeichnet, daß zwischen den Messern (18) jedes Messerpaares ein Distanzstück (20) eingefügt ist, gegen das die Messer von beiden Seiten verspannt sind und daß das Distanzstück mit einer Stechschaufelspitze (32) versehen ist.

4. Vorrichtung nach Anspruch 3, dadurch gekennzeichnet, daß die Stechschaufelspitze (32) das vordere Ende einer am Distanzstück (20) auswechselbar gehalterten Klinge (36) bildet.

5. Vorrichtung nach Anspruch 1, dadurch gekennzeichnet, daß jeweils zwischen den die Rillen aushebenden Messerpaaren (100) vom Maschinenrahmen getragene, in vertikaler Richtung federnde Kufen (102, 144) angeordnet sind, deren hinteres Ende Kappscharen (106) trägt, die auf die gebildeten Rillen zwischen zwei Messern eines Paares ausgerichtet sind, um diese freizuschneiden.

6. Vorrichtung nach Anspruch 5, dadurch gekennzeichnet, daß die die Messerklingen (100) tragenden Messerträgerscheiben (80) paarweise angeordnet von einer Welle (78, 146) getragen werden, die in einem Rahmen (70, 138) gelagert ist, der gegenüber dem Maschinenrahmen in vertikaler Richtung federnd (92) abgestützt ist.

7. Vorrichtung nach Anspruch 6, dadurch gekennzeichnet, daß der Rahmen (70, 138) über ein in Fahrtrichtung vorn liegendes Scharnier (72, 140, 142) am Maschinenrahmen angelenkt ist, und daß am hinteren Ende des Rahmens eine Druckschraubenfeder (92) zwischen dem Maschinenrahmen und dem Werkzeugträgerrahmen angeordnet ist.

8. Vorrichtung nach Anspruch 5, dadurch gekennzeichnet, daß mit einem Saatgutbehälter in Verbindung stehende Saatröhren (128) vorgesehen sind, deren Austragsende zwischen den Kufen auf die von den Messerpaaren gebildete Rille ausgerichtet sind und in Fahrtrichtung hinter den Kappscharen (106) liegen, wobei am hinteren Ende der Kufe (144) zwei Saatröhren (128) zusammenlaufen, die hinter den Kappscharen (106) deltaförmig auseinanderlaufen.

9. Vorrichtung nach Anspruch 5, dadurch gekennzeichnet, daß die Kappschare (106) in Vertikalrichtung federnd am hinteren Ende der Kufe (102) angelenkt sind.

10. Vorrichtung nach Anspruch 9, dadurch gekennzeichnet, daß die Kappschare (106) einzeln über ein schwenkbares Zwischenstück (112) mit einer Mitnehmerkralle (114) und einer Druckfeder (120) vertikal gegen Federdruck schwenkbar angeordnet sind.

## Claims

1. Device for producing parallel-walled furrows in greenland and turf surfaces in which grass seeds are deposited at various heights, comprising a means (38, 100) which revolves in the manner of a drum and which comprises tools (18, 48, 100) projecting outwardly beyond its periphery and lifting the soil out of the furrows, characterized in that the revolving means is formed as drum (38, 80) which rolls along the ground and on which tools formed as blades (18, 43, 100) are arranged in pairs opposite each other with their cutting plane in the plane of the furrow walls and are adjacent each other in the peripheral direction in such a manner that their action regions overlap and ensure slits of continuously varied depth in the ground, and for acting on the cut-free soil strips special means (34, 32, 58, 108) are provided which ensure the lifting out of the soil and its removal from the furrows to be formed.

2. Device according to claim 1, characterized in that the means for lifting out the soil are formed by concave depressions (34) which are arranged on the facing sides of opposite blades (18, 48), a trailing clearing tine (58) being provided for the removal which engages in the region of the plant furrow formed by the blades (18, 48).

3. Device according to claim 2, characterized in that between the blades (18) of each blade pair a spacer (20) is inserted against which the blades are clamped from both sides and that the spacer is provided with a digging shovel tip (32).

4. Device according to claim 3, characterized in that the digging shovel tip (32) forms the front end of a blade (36) replaceably mounted on the spacer (20).

5. Device according to claim 1, characterized in that between each of the blade pairs (100) lifting out the furrows vertically resilient skids (102, 144) are arranged which are carried by the machine frame and the rear end of which carries capping shares (106) which are aligned with the furrows formed between two blades of a pair for cutting them free.

6. Device according to claim 5, characterized in that the blade support discs (80) carrying the blades (100) are carried arranged in pairs by a shaft (78, 146) which is mounted in a frame (70, 138) which is supported vertically resiliently (92) with respect to the machine frame.

7. Device according to claim 8, characterized in that the frame (70, 138) is articulately connected via a hinge (72, 140, 142) lying forwardly in the direction of travel and that at the rear end of the frame a pressure helical spring (92) is disposed between the machine frame and the tool support frame.

8. Device according to claim 5, characterized in that sowing tubes (128) connected to a seed container are provided, the discharge ends of which are aligned with the furrow formed by the blade pairs and lie in the direction of travel behind the capping shares (106), and at the rear end of the skid (144) two sowing tubes (128) converge which diverge in delta manner beind the capping shares (108).

9. Device according to claim 5, characterized in that the capping shares (108) are articulately connected resiliently in the vertical direction to the rear end of the skid (102).

10. Device according to claim 9, characterized in that the capping shares (108) are arranged pivotally vertically against spring pressure via a pivotal intermediate member (112) with a driver claw (114) and a pressure spring (120).

## Revendications

1. Dispositif pour la réalisation de sillons à parois parallèles dans des espaces verts et des pelouses dans lesquels on dépose, à des hauteurs différentes, des semences de gazon, comprenant un organe (35, 100) qui tourne à la manière d'un tambour et présente sur sa périphérie des outils (18, 45, 100) faisant saillie vers l'extérieur qui extraient la terre des sillons, caractérisé par le fait que l'organe tournant est constitué sous la forme d'un tambour (38, 80) roulant sur le sol, tambour sur lequel sont disposés des outils constitués sous la forme de couteaux (18, 45, 100) se faisant face respectivement par paires et dont le plan de coupe est situé dans le plan des parois des sillons et placés les uns à côté des autres dans le sens périphérique de telle sorte que leurs rayons d'action se recoupent et garantissent la réalisation dans le sol de sillons dont la profondeur change de manière continue, tandis que pour agir sur les bandes de terre découpées, des dispositifs spéciaux (34, 32, 58, 106) sont prévus garantissant l'extraction de la terre et son élimination des sillons devant être formés.

2. Dispositif selon la revendication 1, caractérisé par le fait que les dispositifs pour l'extraction de la terre sont constitués par des encoches concaves (34) qui sont pratiquées sur les côtés orientés l'un vers l'autre des couteaux (18, 48) se faisant face, une curette (58) étant prévue pour éliminer la terre, curette qui agit dans la zone du sillon formé par les couteaux (18, 48).

3. Dispositif selon la revendication 2, caractérisé par le fait que, entre les couteaux (18) de chaque paire de couteaux est insérée une pièce d'écartement (20) contre laquelle les couteaux sont serrés des deux côtés et que ladite pièce d'écartement est munie d'une pointe de bêche (32).

4. Dispositif selon la revendication 3 caractérisé par le fait que la pointe de bêche (32) constitue l'extrémité antérieure d'une lame (36) montée de manière interchangeable sur la pièce d'écartement (20).

5. Dispositif selon la revendication 1, caractérisé par le fait qu'entre les paires respectives de couteaux (100) réalisant les sillons, sont disposés des patins (102, 144) élastiques dans le sens vertical et supportés par le châssis de la machine dont l'extrémité postérieure supporte des socs (106) alignés sur les sillons formés entre deux couteaux d'une même paire afin de libérer totalement ces sillons.

6. Dispositif selon la revendication 5, caractérisé par le fait que les disques porte-couteaux (80) qui supportent les lames de couteaux (100) sont disposés par paires et supportés par un arbre (78, 146) qui est positionné dans un châssis (70, 138) lequel s'appuie sur un ressort (82) assurant son élasticité dans le sens vertical par rapport au châssis de la machine.

7. Dispositif selon la revendication 6, caractérisé par le fait que le châssis (70, 138) est articulé sur le châssis de la machine au moyen d'une charnière (72, 140, 142) située à l'avant dans le sens de la marche et qu'à l'extrémité arrière du châssis, entre le châssis de la machine et le châssis du porte-outils, est disposé un ressort hélicoïdal de compression (82).

8. Dispositif selon la revendication 5, caractérisé par le fait que sont prévus des tubes à semences (128) reliés à un réservoir de semences, tubes dont l'orifice de sortie est aligné entre les patins sur le sillon formé par les paires de couteaux et qui sont situés derrière les socs (106) dans le sens de la marche, deux desdits tubes à semences (128) convergeant à l'extrémité arrière du patin (144) et divergeant derrière le soc (106) en formant un delta.

9. Dispositif selon la revendication 5, caractérisé par le fait que les socs (106) sont articulés à l'extrémité arrière du patin (102) en présentant une élasticité dans le sens vertical.

10. Dispositif selon la revendication 8, caractérisé par le fait que les socs (106) sont disposés un par un au moyen d'une entretoise pivotante (112) comprenant un croc d'entraînement (114) et un ressort de compression (120) de manière à pouvoir pivoter verticalement en s'opposant à la pression du ressort.

## FIG.1

## FIG.2

0 109 571

FIG. 3

0 109 571

# FIG. 4

FIG.6

FIG.5

0 109 571

FIG.7

FIG. 8

0 109 571

FIG.9

0 109 571